# EUROPEAN PATENT SPECIFICATION

(11) **EP 2 381 506 B1**
(45) Date of publication and mention of the grant of the patent: **05.12.2012**
(21) Application number: 11159148.3
(22) Date of filing: 22.03.2011
(51) Int. Cl.: H01M 2/10, H01M 10/42

(54) **Battery module**
Batteriemodul
Module de batterie

(30) Priority: 21.04.2010 US 282913 P; 09.08.2010 US 852800
(43) Date of publication of application: 26.10.2011
(73) Proprietor: SB LiMotive Co., Ltd., Giheung-gu Yongin-si, Gyeonggi-do 446-711 (KR)
(72) Inventor: Kim, Tae-Yong, Gyeonggi-do (KR)
(74) Representative: Gulde Hengelhaupt Ziebig & Schneider

(56) References cited:
- EP-A1- 0 989 618
- US-A- 2 812 376
- US-A1- 2003 017 387

## Description

### FIELD OF THE INVENTION

One or more embodiments of the present invention relate to a battery module, and more particularly, to a battery module formed by vertically or horizontally stacking a plurality of unit battery cells.

### DESCRIPTION OF THE RELATED ART

Secondary batteries are rechargeable batteries as opposed to primary batteries that cannot be recharged. Secondary batteries are broadly used in high-tech electronic devices such as cellular phones, notebook computers and camcorders and also are used in vehicles.

A secondary battery includes an electrode assembly and an electrolyte. The electrode assembly includes a positive plate, a negative plate, and a separator. The electrolyte usually includes lithium ions. The positive and negative plates of the electrode assembly may each include an electrode tab protruding outward.

The electrode assembly may be accommodated in a case and electrode terminals may be exposed outside the case. The electrode tabs may protrude outside the electrode assembly so as to be electrically connected to the electrode terminals. The case may have a cylindrical shape or a rectangular parallelepiped shape.

A plurality of unit battery cells that are secondary batteries may be horizontally or vertically stacked so as to form a battery module. Also, a plurality of battery modules may be vertically and/or horizontally stacked so as to form one battery pack. Prior art is represented e.g. by US 2003 017387 and US 2812376.

### SUMMARY

The invention is defined in claim 1. One or more embodiments of the present invention include a battery module that is formed by vertically or horizontally stacking a plurality of unit battery cells and can control a coupling force in the direction in which the plurality of unit battery cells are stacked.

Additional aspects will be set forth in part in the description which follows and, in part, will be apparent from the description, or may be learned by practice of the presented embodiments.

According to one or more embodiments of the present invention, a battery module includes a plurality of unit battery cells stacked along a first direction, and a pair of end plates disposed along the first direction at both end portions of the plurality of unit battery cells, a pressure control unit is provided between an end plate and the outermost unit battery cell, the pressure control unit being elastically biased in the first direction.

The pressure control unit is adapted to adjust a pressure exerted on the plurality of battery cells. The pressure control unit preferably comprises an elastic plate extending along a second direction different from the first direction and being elastically biased in the first direction.

The elastic plate may have the structure of a plate spring. The elastic plate may be strained between a first and a second point such that the shortest distance between the first and the second point is shorter than the length of the elastic plate provided between the first and the second point.

The pressure control unit is preferably coupled to an inner side surface of the end plate facing the plurality of unit battery cells. The pressure control unit may further comprise a control screw arranged at and contacting a first end of the elastic plate, the control screw being adapted to adjust a force exerted on the elastic plate and thus a pressure exerted on the plurality of battery cells by the elastic plate.

The control screw may be arranged to exert a force on the elastic plate along the second direction such that the elastic plate bends along the first direction.

In one embodiment, the pressure control unit further comprises a support to support a second end of the elastic plate and a screw support to support the control screw. The support is preferably coupled to the end plate. Additionally or alternatively, the screw support is coupled to the end plate.

The elastic plate may comprise a support groove being coupled to the support, and a control groove being coupled to the control screw.

The support may comprise an insertion groove being coupled to the support groove of the elastic plate.

The distance between an end of the control screw contacting the elastic plate and the support is preferably adjustable by turning the control screw.

The shortest distance between the end of the control screw contacting the elastic plate and the support is preferably shorter than the length of the elastic plate arranged between the control screw and the support.

Further provided is a battery pack comprising a plurality of battery modules according to the invention and an electric vehicle comprising at least one battery pack according to the invention.

According to one or more embodiments of the present invention, a battery module formed by vertically or horizontally stacking a plurality of unit battery cells can control a coupling force in the direction in which the plurality of unit battery cells are stacked.

### BRIEF DESCRIPTION OF THE DRAWINGS

These and/or other aspects will become apparent and more readily appreciated from the following description of the embodiments, taken in conjunction with the accompanying drawings of which:

FIG. 1 is a perspective view of a battery module included in a battery pack according to an embodiment of the present invention and formed by stacking a plurality of unit battery cells;

FIG. 2 is an exploded perspective view illustrating components of the battery module of FIG. 1;

FIG. 3 is a schematic perspective view illustrating an exterior of a unit battery cell included in the battery module of FIG. 1;

FIG. 4 is a schematic top view of a pressure control unit interposed between each end plate and stacked unit battery cells in the battery module of FIG. 1;

FIGS. 5A and 5B illustrate an elastic plate not yet installed and an elastic plate already installed, respectively, in the battery module of FIG. 1;

FIG. 6 is a perspective view of a battery pack formed by stacking a plurality of the battery modules of FIG. 1 vertically and horizontally and supported by an external frame; and

FIG. 7 is an image of an electric car that employs the battery pack of FIG. 6, according to an embodiment of the present invention.

### DETAILED DESCRIPTION

Reference will now be made in detail to embodiments, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description.

A battery pack 10 according to an embodiment of the present invention may be formed by stacking at least one battery module 100 vertically and/or horizontally. Each of the battery modules 100 may be formed by stacking at least one unit battery cell 110 vertically and/or horizontally.

Each of the staked unit battery cells 110 may expand or contract when charge or discharge occurs. In this case, volume expansion of the unit battery cells 110 may increase resistance and thus degrade the efficiency of the unit battery cells 110. Accordingly, pressure needs to be applied to the stacked unit battery cells 110.

To this end, the stacked unit battery cells 110 may be supported at both ends along the stacking direction by end plates 150. Accordingly, the unit battery cells 110 may be compressed and fixed so as not to further extend horizontally due to expansion and contraction.

In the battery module 100 according to an embodiment of the present invention, elastic plates 161 that can control elasticity may be inserted between the end plates 150 and the unit battery cells 110, thereby controlling the pressure which is to be applied to the stacked unit battery cells 110. Thus, the pressure which is to be applied to the stacked unit battery cells 110 may be set for each of the battery modules 100. In addition, even when the characteristics of the unit battery cells 110 stacked in the battery module 100 are changed, an optimal performance may be shown.

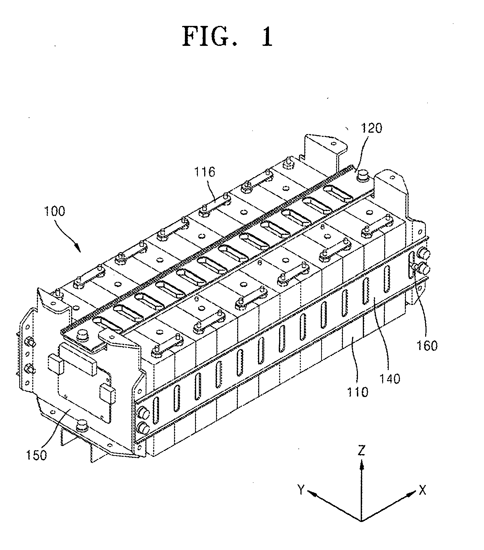

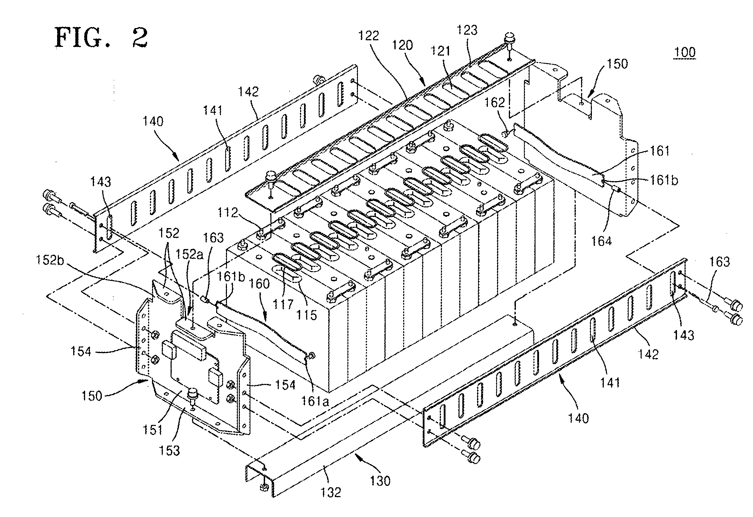

FIG. 1 is a perspective view of a battery module 100 according to an embodiment of the present invention, which is formed by stacking a plurality of unit battery cells 110 horizontally. FIG. 2 is an exploded perspective view illustrating components of the battery module 100 of FIG. 1. A battery pack is formed by stacking a plurality of the battery modules 100 vertically and/or horizontally.

Referring to FIGS. 1 and 2, the battery module 100 may include the plurality of unit battery cells 110, the upper frame 120, the lower frame 130, the side frames 140, the end plates 150, and a pressure control unit 160.

The unit battery cells 110 may be stacked in a first direction to form the battery module 100. The upper frame 120 is disposed above the unit battery cells 110 stacked in the first direction so as to support the unit battery cells 110 in a second direction. The lower frame 130 is disposed below the unit battery cells 110 stacked in the first direction so as to support the unit battery cells 110 from below.

The side frames 140 are disposed on sides of the unit battery cells 110 stacked in the first direction so as to support the unit battery cells 110 from sides. A pair of the end plates 150 are disposed on both ends, respectively, of the unit battery cells 110 stacked in the first direction so as to support the unit battery cells 110 from the both ends. The pressure control unit 160 may be installed between each of the end plates 150 and the unit battery cells 110 so as to control a pressure that is to be applied to the stacked unit battery cells 110. The pressure control unit 160 preferably contacts the respective end plate 150 directly.

Here, the first direction may be the X direction, and the second direction may be the Z direction. In this case, if the battery pack 10 is horizontally disposed, the X direction may be a horizontal direction and the Z direction may be a vertical direction. However, the X and Y directions are not limited thereto and may be differently regarded according to the arrangement direction of the battery pack 10.

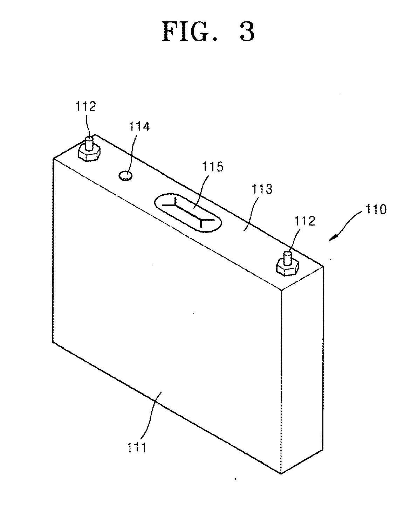

FIG. 3 illustrates an exterior of one of the unit battery cells 110 included in the battery module 100 of FIG. 1. A plurality of the unit battery cells 110 may be stacked in the horizontal direction so as to form the battery module 100 and may generally have a rectangular parallelepiped shape as illustrated in FIG. 3. However, the unit battery cells 110 are not limited to the rectangular parallelepiped shape and may also have various shapes such as a cylindrical shape or a pouch shape.

The unit battery cells 110 may be general secondary batteries. A secondary battery may include an electrode assembly and an electrolyte. The electrode assembly may include a positive plate, a negative plate and a separator. The electrolyte may contain lithium ions. The positive and negative plates of the electrode assembly may be electrically connected to a current collector.

The electrode assembly may be accommodated in a case 111, and electrode terminals 112 may be exposed outside the case 111. The current collector electrically connected to the positive and negative plates may be electrically connected to the electrode terminals 112, within the case 111. The case 111 may have a cylindrical shape or a rectangular parallelepiped shape. A unit battery cell 110 may include a plurality of electrode assemblies in one case 111.

A plurality of unit battery cells 110 may be horizontally stacked so as to form the battery module 100. In the battery module 100, the electrode terminals 112 of neighbouring unit battery cells 110 may be electrically connected to each other. In this case, the electrode terminals 112 of the neighbouring unit battery cells 110 may be electrically connected by using bus bars 116.

The neighbouring unit battery cells 110 may be disposed so that polarities of neighbouring electrode terminals thereof are opposite to each other. A plurality of unit battery cells 110 may be connected in parallel, in series, or in parallel and series. Accordingly, the unit battery cells 110 may be continuously connected to each other so as to form one battery module 100. The connection method and the number of unit battery cells 110 to be stacked may be determined in consideration of required electric capacities when the unit battery cells 110 are designed.

A cap plate 113 may be coupled to an opening of the case 111. The cap plate 113 may be a thin plate. An electrolyte inlet for injecting the electrolyte into the case 111 may be formed in the cap plate 113. The electrolyte inlet may be sealed with a sealing plug 114 after the electrolyte is injected.

A vent member 115 in which grooves are formed may be formed on the cap plate 113 such that the vent member 115 may be broken when a preset internal pressure is reached. If the upper frame 120 is disposed on the unit battery cells 110 that are horizontally stacked, exhaust outlets 121 of the upper frame 120 may be disposed on vent members 115.

The unit battery cells 110 according to the present embodiment may be lithium-ion secondary batteries as described above. However, the unit battery cells 110 are not limited to the lithium-ion secondary batteries and may also be various batteries such as nickel-cadmium secondary batteries, nickel-hydrogen secondary batteries or lithium batteries.

Meanwhile, in each of the unit battery cells 110 containing lithium, the electrode assembly expands or contracts when charge or discharge occurs. In this case, the expansion and the contraction of the electrode assembly may apply physical force to the case 111. As such, the case 111 physically expands and contracts in correspondence with the expansion and the contraction of the electrode assembly.

The deformed shape of the case 111 due to repeated expansion and contraction may be fixed. The expansion in volume may increase resistance so as to reduce the efficiency of the unit battery cells 110. In order to prevent the reduction in efficiency, a pair of the end plates 150 may be disposed at both ends of the stacked unit battery cells 110 so as to support the stacked unit battery cells 110. Accordingly, a predetermined pressure may be applied to the stacked unit battery cells 110.

Since the battery module 100 according to an embodiment of the present invention includes the pressure control unit 160, a pressure that is to be applied to the stacked unit battery cells 110 may be controlled. The pressure control unit 160 may be installed between each of the end plates 150 and the unit battery cells 110.

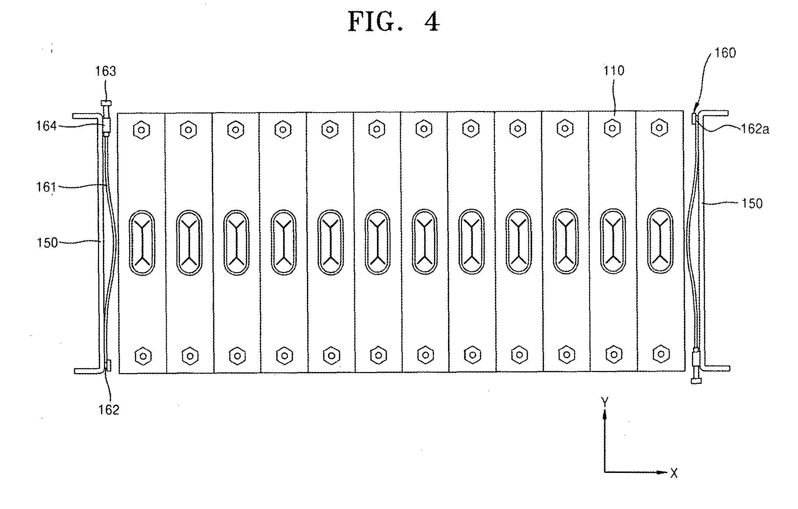

FIG. 4 illustrates the pressure control unit 160 interposed between each of the end plates 150 and the unit battery cells 110. The pressure control unit 160 may include an elastic plate 161, a support 162, a control screw 163, and a screw support 164. The pressure control unit 160 is adapted to adjust a pressure exerted on the plurality of battery cells 110.

The elastic plate 161 may be bent to form elasticity in an X direction or a -X direction. In other words, the elastic plate 161 is elastically biased in the X or -X direction to exert a force on the respective end plate 150. The support 162 supports one end of the elastic plate 161. The control screw 163 is disposed opposite to the support 162 so as to control the elastic plate 161 toward the support 162. The screw support 164 supports the control screw 163.

The elastic plate 161 may be installed so as to extend in the Y direction between each of the end plates 150 and the unit battery cells 110. One end of the elastic plate 161 may be supported by the support 162, and the other end thereof may be supported by the control screw 163. In this case, as the control screw 163 is moved in the Y direction or a -Y direction, the elastic plate 161 may be deformed or bent to form an elastic force in the X direction or the -X direction.

In other words, since the elastic plate 161 is deformed or bent by the control screw 163, the elastic plate 162 may act as a plate spring. In addition, due to the control of or adjustment by the control screw 163, the force or pressure to be applied to the unit battery cells 110 may be actively controlled or adjusted.

Accordingly, the pressure or force to be applied to the unit battery cells 110 may be set differently for each of battery modules 100. Thus, by battery modules 100 each having the same structure, different pressures may be applied to the unit battery cells 100 of each of the battery modules 100 in a single battery pack.

In addition, even when the characteristics of the unit battery cells 110 stacked in the battery module 100 are changed, an optimal performance may be shown. Thus, the performance of the battery module 100 may be improved by periodic maintenance.

A support groove 161 a may be formed on the one end of the elastic plate 161 that is supported by the support 162, and a control groove 161 b may be formed on the other end of the elastic plate 161 that is supported by the control screw 163. The elastic plate 161 is thus stably supported by the support groove 161 a and the control groove 161 b.

The support groove 161a may stably contact the support 162 and thus prevent the support 162 from sliding in a Z direction. The control groove 161 b may stably contact the control screw 163 and thus prevent the control screw 163 from sliding in the Z direction.

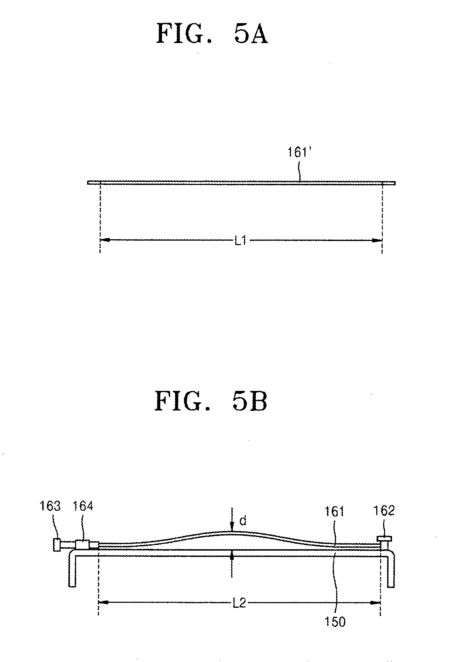

FIGS. 5A and 5B illustrate an elastic plate 161' not yet installed and an elastic plate 161 already installed, respectively. A distance between the support groove 161a and the control groove 161 b, that is, the width of the elastic plate 161' not yet installed in the pressure control unit 160, is L1.

In the case of the elastic plate 161 installed in the pressure control unit 160, a distance between the support groove 161a and the control groove 161b is L2. When L2 becomes greater than L1, the center of the elastic plate 161 is bent by "d", and the elasticity is applied in the X direction or the -X direction.

The support 162 may protrude from a surface of each of the end plates 150 that faces the unit battery cells 110. The support 162 may be fixed to each of the end plates 150 by welding or screw coupling.

An insertion groove 162a into which one end of the elastic plate 161 is inserted may be formed on the support 162. Thus, the one end of the elastic plate 161 may be prevented from deviating from the support 162 in the X direction or the -X direction.

A part of the control screw 163 may protrude outward from a side of each of the end plates 150. In other words, as illustrated in FIG. 1, a part of the control screw 163 protrudes outward via screw holes 143, which are through holes, formed in each of the side frames 140, and the control screw 163 is moved in the Y direction or a -Y direction by turning the exposed part of the control screw 163, thereby controlling the pressure to be applied to the unit battery cells 110. According to another embodiment, a part of the control screw 163 may protrude outward via through holes (not shown) formed in each of the side frames 140.

The screw support 164 supports the control screw 163 so that the control screw 163 may be inserted into the screw support 164 and moved in the Y direction or a -Y direction. The screw support 164 may protrude from the surface of each of the end plates 150 that faces the unit battery cells 110. The screw support 164 may be fixed to each of the end plates 150 by welding or the like.

The control screw 163 may be a bolt having a screw thread formed on its outer circumference. In this case, a screw thread engaging with the screw thread of the control screw 163 may be formed on the inner circumference of the screw support 164.

In the embodiment illustrated in FIGS. 1 through 5B, the elastic plate 161 is extended in the Y direction and is accordingly bent in the X direction or the -X direction, so that elasticity or a force is applied in the X direction or the -X direction. However, the present invention is not limited to this embodiment, and the elastic plate 161 may be disposed in any direction as long as elasticity is applied toward the unit battery cells 110.

A pair of the end plates 150 may be disposed at both ends of the unit battery cells 110 stacked in the horizontal direction and/or the vertical direction and electrically connected to each other. The upper frame 120, the lower frame 130 and the side frames 140 may be disposed on upper, lower, and side surfaces, respectively, of the end plates 150 and may compress and fix the unit battery cells 110 such that the unit battery cells 110 do not extend in the horizontal direction due to expansion and contraction.

The pressure control unit 160 may be installed between one of the end plates 150 and a unit battery cell 110 located last at one end of the stacked unit battery cells 110. Preferably, the pressure control unit 160 is in direct contact with the respective end plate 150. Even more preferably, the pressure control unit 160 is formed in direct contact with the outermost unit battery cell 110. Alternatively, the pressure control unit 160 may be installed between the other end plate 150 and a unit battery cell 110 located last at the other end of the stacked unit battery cells 110. Alternatively, the pressure control unit 160 may be installed between each of the other end plates 150 and the unit battery cells 110.

The end plates 150 may be disposed at both ends of the battery module 100. One surface of the end plates 150 may contact outer surfaces of the unit battery cells 110 disposed at both outermost sides of the battery module 100, so that the end plates 150 support the stacked unit battery cells 110.

Each of the end plates 150 may include a base plate 151 and flanges 152, 153 and 154. The base plate 151 has a size that is sufficient to cover an outer surface of the unit battery cells 110. Although the base plate 151 has an almost square shape in the present embodiment, the shape of the base plate 151 is not limited thereto.

The flanges 152, 153 and 154 may be bent from the base plate 151 away from the unit battery cells 110. The flanges 152, 153 and 154 may include top flanges 152, a bottom flange 153, and side flanges 154. The top flanges 152 are coupled to the upper frame 120. The bottom flange 153 is coupled to the lower frame 130. The side flanges 154 are correspondingly coupled to the side frames 140.

Meanwhile, a plurality of the battery modules 100 may be vertically and/or horizontally stacked so as to form the battery pack 10. In this case, the end plates 150 of neighboring battery modules 100 may be coupled to each other so that the neighboring battery modules 100 are supported by each other.

In this case, the top flanges 152 of one battery module 100 may be coupled to the bottom flange 153 of a battery module 100 that is stacked thereabove. The bottom flanges 153 of one battery module 100 may be coupled to the upper flanges 152 of a battery module 100 that is stacked therebelow. The side flanges 154 of one battery module 100 may be coupled to the side flanges 154 of a battery module 100 adjacent thereto sidewards.

In this case, the top, bottom, and side flanges 152, 153, and 154 may be respectively screw-coupled to the upper frame 120, the lower frame 130, and the side frames 140 by using bolts and nuts. However, the coupling method is not limited thereto and the top, bottom, and side flanges 152, 153, and 154 may be respectively coupled to the upper frame 120, the lower frame 130, and the side frames 140 by using various methods such as a welding method.

The upper frame 120 may be disposed on the unit battery cells 110 stacked in the horizontal direction and may be coupled to the top flanges 152 corresponding to the upper surfaces of the end plates 150. In this case, the exhaust outlets 121 are formed in the upper frame 120 at positions corresponding to the vent members 115 of the unit battery cells 110.

The upper frame 120 may have upper frame bent portions 122 bent from lengthwise edges of the upper frame 120. A sealing member 123 is formed on inner surfaces of the upper frame bent portions 122. In this case, the sealing member 123 may be formed of an elastic material such as rubber. The upper frame 120 of one battery module 100 may have the lower frame 130 of a battery module 100 stacked thereabove and the sealing member 123 fit therein and may be coupled to the same, thereby forming a sealed gas discharge passage.

Sealing rings 117 may be disposed between the upper frame 120 and the vent members 115 such that a gas ejected from the vent members 115 flows outward through the exhaust outlets 121 of the upper frame 120 without influencing neighboring unit battery cells 110.

The sealing rings 117 may be, for example, O rings. In this case, grooves 152a in which the upper frame 120 is to be seated are formed at middles of the upper portions of the end plates 150. Accordingly, the exhaust outlets 121 of the upper frame 120 may closely contact the unit battery cells 110.

Also, the sealing rings 117 between the unit battery cells 110 and the upper frame 120 may each have a sufficient thickness. As such, when the upper frame 120 is coupled to the end plates 150, the upper frame 120 may apply pressure down on the unit battery cells 110 so as to compress the sealing rings 117 interposed therebetween and thus the upper frame 120 may closely contact the unit battery cells 110.

The lower frame 130 is disposed under the unit battery cells 110 so as to support the weight of the unit battery cells 110 and is connected to the bottom flanges 153 of the end plates 150. In order to support the weight of the unit battery cells 110, the lower frame 130 may include lower frame bent portions 132 bent away from the unit battery cells 110.

The lower frame bent portions 132 may be bent downward. The lower frame bent portions 132 of one battery module 100 may be coupled to the upper frame 120 of a battery module 100 stacked therebelow, thereby forming a gas passage. In this case, the gas passage formed by combining the lower frame 130 of one battery module 100 and the upper frame 120 of the battery module 100 stacked therebelow may function as a degassing duct for discharging a generated gas.

The lower frame 130 of one battery module 100 and the upper frame 120 of a battery module 100 stacked therebelow may discharge a gas in a sealed state or may serve as a gas discharge inducing passage in an incompletely sealed state. When gas is generated from the unit battery cells 110, explosion or a rapid chemical reaction equivalent to the explosion occurs, and thus an explosive amount of gas is generated within a short period of time. Thus, if a duct for discharging gas is formed in a battery pack, the gas may be easily discharged.

The side frames 140 may be disposed at sides of the unit battery cells 110 so as to support the unit battery cells 110 from side surfaces of the unit battery cells 110. The side frames 140 may extend by a uniform width from one of the end plates 150 to the other of the end plates 150.

One or more through holes 141 may be formed in each of the side frames 140 so as to reduce the load of the side frames 140. Also, the side frames 140 may include side frame bent portions 142 bent away from the unit battery cells 110 and thus may increase the strength of the side frames 140 against bending.

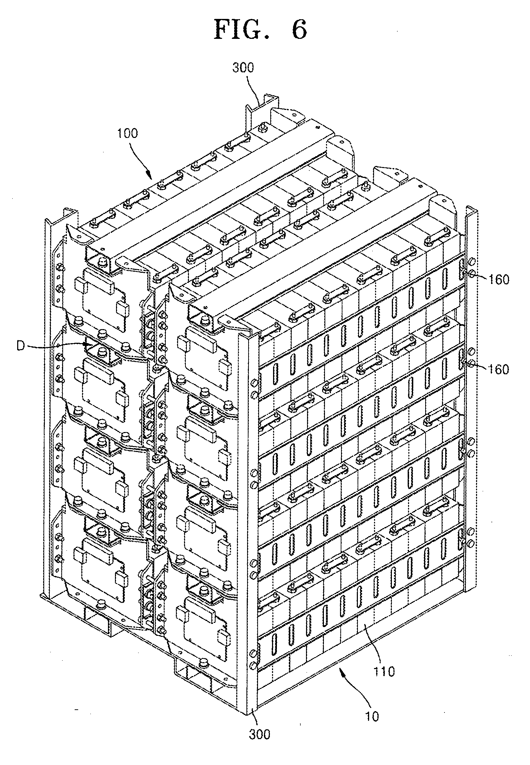

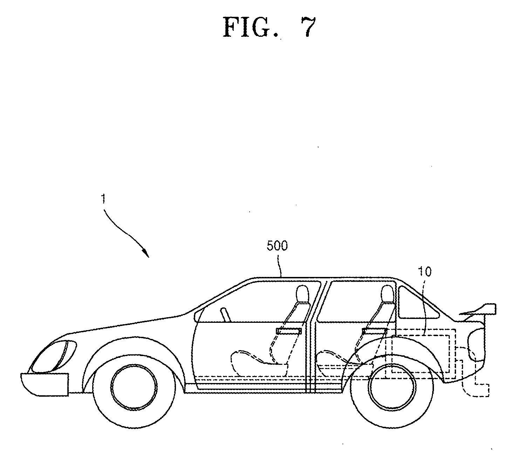

FIG. 6 illustrates a battery pack 10 formed by stacking a plurality of the battery modules 100 of FIG. 1 vertically and horizontally and supported by an external frame 300. FIG. 7 is an image of an electric car 1 that employs the battery pack 10 of FIG. 6, according to an embodiment of the present invention.

Referring to FIG. 6, a battery module 100 is formed by horizontally stacking a plurality of unit battery cells 110, and two rows of battery modules 100 are stacked in four layers. Thus, a total of eight (2x4) battery modules are coupled together to form the battery pack 10.

Each of the battery modules 100 may form a degassing duct D due to coupling of the lower frame of the each battery module 100 to the upper frame 120 of a battery module 100 stacked therebelow. In this case, the battery pack 10 may form eight degassing ducts D.

In the electric car 1 having the battery pack 10 installed therein, the elastic plates 161 that can control elasticity may be inserted between the end plates 150 and the unit battery cells 110, thereby controlling the pressure which is to be applied to the stacked unit battery cells 110. Thus, the pressure which is to be applied to the stacked unit battery cells 110 may be set for each of the battery modules 100. In addition, even when the characteristics of the unit battery cells 110 stacked in the battery module 100 are changed, an optimal performance may be shown.

As described above, according to the one or more of the above embodiments of the present invention, a battery pack formed by stacking a plurality of battery modules each formed by stacking a plurality of unit battery cells can control a coupling force in the direction in which the plurality of unit battery cells are stacked.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A battery module (10D) comprising:
a plurality of unit battery cells (110) stacked along a first direction (X), and
a pair of end plates (150) disposed along the first direction (X) at both end portions of the plurality of unit battery cells (110),
a pressure control unit (160) provided between an end plate (150) and the outermost unit battery cell (110), the pressure control unit (160) being elastically biased in the first direction (X),
**characterized in that**
an elastic plate (161) is provided having the structure of a plate spring extending along a second direction (Y) different from the first direction (X) and being elastically biased in the first direction (X);
a control screw (163) is arranged at and contacting a first end of the elastic plate (161), the control screw being adapted to adjust a force exerted on the elastic plate (161) and thus a pressure exerted on the plurality of battery cells (110) by the elastic plate (161);
a support (162) is provided to support a second end of the elastic plate (161) and a screw support (164) to support the control screw (163);
wherein the elastic plate (161) comprises a support groove (161a) being coupled to the support (162), and a control groove (161b) being coupled to the control screw (163).

2. The battery module (100) of claim 1, wherein the pressure control unit (160) is adapted to adjust a pressure exerted on the plurality of battery cells (110).

3. The battery module (100) of claim 1, wherein the elastic plate (161):
is strained between a first and a second point such that the shortest distance between the first and the second point (L2) is shorter than the length of the elastic plate (161) provided between the first and the second point.

4. The battery module (100) of any of the previous claims, wherein the pressure control unit (160) is coupled to an inner side surface of the end plate (150) facing the plurality of unit battery cells (110).

5. The battery module (100) of claim 1, wherein the control screw (163) is arranged to exert a force on the elastic plate (161) along the second direction (Y) such that the elastic plate (161) bends along the first direction (X).

6. The battery module (100) of any of claim 1, wherein the support (162) and/or the screw support (164) are coupled to the end plate (150).

7. The battery module (100) of claim 1, wherein the support (162) comprises an insertion groove (162a) being coupled to the support groove (161a) of the elastic plate (161).

8. The battery module (100) of any of claims 1, 6 or 7, wherein the distance between an end of the control screw (163) contacting the elastic plate (161) and the support (162) is adjustable by turning the control screw (163).

9. The battery module (100) of claim 8, wherein the shortest distance between the end of the control screw (163) contacting the elastic plate (161) and the support (162) is shorter than the length of the elastic plate (161) arranged between the control screw (163) and the support (162).

10. A battery pack (10) comprising a plurality of battery modules (100) of one of claims 1 to 9.

11. An electric vehicle (1) comprising at least one battery pack (10) of claim 10.

## Patentansprüche

1. Batteriemodul (100), umfassend:
eine Vielzahl von entlang einer ersten Richtung (X) gestapelten Batteriezelleneinheiten (110), und
ein Paar von Endplatten (150), die entlang der ersten Richtung (X) an beiden Endabschnitten der Vielzahl von Batteriezelleneinheiten (110) angeordnet sind,
eine zwischen einer Endplatte (150) und der äußersten Batteriezelleneinheit (110) vorgesehene Druckregelungseinheit (160), wobei die Druckregelungseinheit (160) federnd in die erste Richtung (X) vorgespannt ist,
**dadurch gekennzeichnet, dass**
eine federnde Platte (161) vorgesehen ist, welche die Struktur einer Blattfeder aufweist, die sich entlang einer sich von der ersten Richtung (X) unterscheidenden zweiten Richtung (Y) erstreckt und federnd in der ersten Richtung (X) vorgespannt ist;
eine Regulierschraube (163) an einem ersten Ende der federnden Platte (161) dieses kontaktierend angeordnet ist, wobei die Regulierschraube ausgebildet ist, eine auf die federnde Platte (161) ausgeübte Kraft und somit einen auf die Vielzahl von Batteriezellen (110) durch die federnde Platte (161) ausgeübten Druck einzustellen;
eine Abstützung (162) zum Abstützen eines zweiten Endes der federnden Platte (161) sowie eine Schraubenlagerung (164) zum Halten der Regulierschraube (163) vorgesehen sind;
wobei die federnde Platte (161) eine Stützkerbe (161 a), die mit der Abstützung (162) in Verbindung steht, und eine Regulierkerbe (161b), die mit der Regulierschraube (163) in Verbindung steht, umfasst.

2. Batteriemodul (100) nach Anspruch 1, wobei die Druckregelungseinheit (160) ausgebildet ist, einen auf die Vielzahl von Batteriezellen (110) ausgeübten Druck einzustellen.

3. Batteriemodul (100) nach Anspruch 1, wobei die federnde Platte (161):
zwischen einem ersten und einem zweiten Punkt derart unter Spannung gesetzt ist,
dass die kürzeste Entfernung zwischen dem ersten und dem zweiten Punkt (L2) kürzer ist als die Länge der federnden Platte (161), die zwischen dem ersten und dem zweiten Punkt vorgesehenen ist.

4. Batteriemodul (100) nach einem der vorstehenden Ansprüche, wobei die Druckregelungseinheit (160) mit einer der Vielzahl von Batteriezelleneinheiten (110) zugewandten Innenseitenfläche der Endplatte (150) in Verbindung steht.

5. Batteriemodul (100) nach Anspruch 1, wobei die Regulierschraube (163) so angeordnet ist, dass sie entlang der zweiten Richtung (Y) eine Kraft auf die federnde Platte (161) derart ausübt, dass sich die federnde Platte (161) entlang der ersten Richtung (X) biegt.

6. Batteriemodul (100) nach Anspruch 1, wobei die Abstützung (162) und/oder die Schraubenhalterung (164) mit der Endplatte (150) in Verbindung stehen.

7. Batteriemodul (100) nach Anspruch 1, wobei die Abstützung (162) eine mit der Stützkerbe (161 a) der federnden Platte (161) in Verbindung stehende Einführkerbe (162a) umfasst.

8. Batteriemodul (100) nach einem der Ansprüche 1, 6 oder 7, wobei der Abstand zwischen einem die federnde Platte (161) berührenden Ende der Regulierschraube (163) und der Abstützung (162) durch Drehen der Regulierschraube (163) verstellbar ist.

9. Batteriemodul (100) nach Anspruch 8, wobei die kürzeste Entfernung zwischen dem die federnde Platte (161) berührenden Ende der Regulierschraube (163) und der Abstützung (162) kürzer ist als die Länge der zwischen der Regulierschraube (163) und der Abstützung (162) angeordneten federnden Platte (161).

10. Batterie-Pack (10) umfassend eine Vielzahl von Batteriemodulen nach einem der Ansprüche 1 bis 9.

11. Elektrofahrzeug (1) umfassend mindestens ein Batterie-Pack (10) nach Anspruch 10.

## Revendications

1. Module de batterie (100) comprenant :
une pluralité d'éléments de batterie unitaires (110) empilés le long d'une première direction (X), et
une paire de plaques d'extrémité (150) disposées le long de la première direction (X) au niveau des deux parties d'extrémité de la pluralité d'éléments de batterie unitaires (110),
une unité de commande de pression (160) disposée entre une plaque d'extrémité (150) et l'élément de batterie unitaire le plus externe (110), l'unité de commande de pression (160) étant élastiquement sollicitée dans la première direction (X),
**caractérisé en ce que** :
une plaque élastique (161) est prévue, ayant la structure d'un ressort à lame s'étendant le long d'une deuxième direction (Y) différente de la première direction (X) et étant élastiquement sollicitée dans la première direction (X) ;
une vis de commande (163) est disposée au niveau d'une première extrémité de la plaque élastique (161) et en contact avec cette dernière, la vis de commande étant adaptée pour régler une force exercée sur la plaque élastique (161) et par conséquent une pression exercée sur la pluralité d'éléments de batterie (110) par la plaque élastique (161) ;
un support (162) est prévu pour supporter une deuxième extrémité de la plaque élastique (161) et un support de vis (164) pour supporter la vis de commande (163) ;
dans lequel la plaque élastique (161) comprend une rainure de support (161 a) qui est reliée au support (162), et une rainure de commande (161 b) qui est reliée à la vis de commande (163).

2. Module de batterie (100) de la revendication 1, dans lequel l'unité de commande de pression (160) est adaptée pour régler une pression exercée sur la pluralité d'éléments de batterie (110).

3. Module de batterie (100) de la revendication 1, dans lequel la plaque élastique (161) :
est tendue entre un premier et un deuxième point pour que la distance la plus courte entre le premier et le deuxième point (L2) soit plus courte que la longueur de la plaque élastique (161) prévue entre le premier et le deuxième point.

4. Module de batterie (100) de l'une des revendications précédentes, dans lequel l'unité de commande de pression (160) est reliée à une surface latérale intérieure de la plaque d'extrémité (150) faisant face à la pluralité d'éléments de batterie unitaires (110).

5. Module de batterie (100) de la revendication 1, dans lequel la vis de commande (163) est disposée pour exercer une force sur la plaque élastique (161) le long de la deuxième direction (Y) de sorte que la plaque élastique (161) se plie le long de la première direction (X).

6. Module de batterie (100) de la revendication 1, dans lequel le support (162) et/ou le support de vis (164) est/sont relié(s) à la plaque d'extrémité (150).

7. Module de batterie (100) de la revendication 1, dans lequel le support (162) comprend une rainure d'insertion (162a) qui est reliée à la rainure de support (161 a) de la plaque élastique (161).

8. Module de batterie (100) de l'une quelconque des revendications 1, 6 ou 7, dans lequel la distance entre une extrémité de la vis de commande (163) en contact avec la plaque élastique (161) et le support (162) peut être réglée en tournant la vis de commande (163).

9. Module de batterie (100) de la revendication 8, dans lequel la distance la plus courte entre l'extrémité de la vis de commande (163) en contact avec la plaque élastique (161) et le support (162) est plus courte que la longueur de la plaque élastique (161) disposée entre la vis de commande (163) et le support (162).

10. Bloc-batterie (10) comprenant une pluralité de modules de batterie (100) de l'une des revendications 1 à 9.

11. Véhicule électrique (1) comprenant au moins un bloc-batterie (10) de la revendication 10.
